Europäisches Patentamt

European Patent Office

Office européen des brevets

(19)

(11) Veröffentlichungsnummer: **0 009 729**

**A1**

(12) # EUROPÄISCHE PATENTANMELDUNG

(21) Anmeldenummer: 79103566.0

(22) Anmeldetag: 21.09.79

(51) Int. Cl.³: **B 65 G 17/06**
**B 24 C 3/26**

(30) Priorität: 06.10.78 CH 10402/78

(43) Veröffentlichungstag der Anmeldung:
16.04.80 Patentblatt 80/8

(84) Benannte Vertragsstaaten:
AT BE DE FR GB IT NL SE

(71) Anmelder: GEORG FISCHER AKTIENGESELLSCHAFT
Mühlentalstrasse 105
CH-8201 Schaffhausen(CH)

(72) Erfinder: Böhm, Max
Seeblick 3
D-7760 Radolfzell 18(DE)

(54) **Plattenbandförderer.**

(57) Plattenbandförderer bestehend aus sich gegenseitig überdeckenden Platten (2) und seitlich davon angeordneten Gelekketten wobei jede Platte (2) an einem seitlichen Lappen (6) der Kettenglieder (4) befestigt ist. Jede Platte (2) weist eine halbkreisförmige Nute (11) und eine halbkreisförmige Leiste (15) auf, wobei die Platten (2) so an den Kettengliedern (4) befestigt sind, daß die Leiste (15) einer Platte (2) in der Nute (11) der nachfolgenden Platte (2) zu liegen kommt. Dabei ist die Kreis-Mitte (12) der Nute (11) und die Kreis-Mitte (16) der Leiste (15) koaxial zur Drehachse (20) des Drehgelenkes an den Kettengliedern (4) angeordnet.

Da zwischen Nute (11) und Leiste (15) ein gleichbleibender Spalt (21) vorhanden ist, kann das Plattenband in beiden Richtungen zur Plattenoberfläche reibungsfrei und somit verschleißarm abgebogen werden, ohne daß eine Veränderung der labyrinthartigen Überdeckung entsteht.

Dies ermöglicht die Verwendung des Plattenbandförderers bei Strahlmaschinen zum Umwälzen der Werkstücke, wobei auch bei kleinen Werkstücken aus Kunststoff keine störungen durch eingeklemmte Werkstücke auftreten können.

Fig. 2

GEORG FISCHER AKTIENGESELLSCHAFT, Schaffhausen

2080/SM / 27.8.1979 / 2660Li-bg


Plattenbandförderer


Die Erfindung betrifft einen Plattenbandförderer, insbesondere für die Förderung und Umwälzung der Werkstücke bei Strahlmaschinen, bestehend aus sich gegenseitig überdeckenden Platten und seitlich angeordneten Gelenkketten, wobei jede Platte an einem seitlichen Lappen der Kettenglieder befestigt ist.

Es ist ein Plattenbandförderer der eingangs genannten Art bekanntgeworden (CH-PS 399 228) bei welchem sich die gegenseitig überdeckenden Platten berühren. Da sich die Berührungsstellen durch die verschiedenen Umlenkungen bei z.B. einer Bandmulde immer wieder verschieben, entsteht eine starke Reibung zwischen den Platten aus Stahl, was zu einem grossen Verschleiss und somit zum Verklemmen von kleinen Teilen in den entstanden Oeffnungen führt. Um eine Verminderung des Verschleiss und eine dichte Ueberdeckung zu erreichen, werden an einer Plattenunterseite in einer Nute eine Gummi- oder Kunststoffleiste angeordnet (CH-PS 398 896). Es zeigte sich jedoch, dass diese Leisten während des Betriebes durch Reibungskräfte und Strahlmittel zerstört werden, wodurch noch grössere Oeffnungen zwischen den Platten entstehen. Störungen durch eingeklemmte Werkstücke sind die Folge, wobei auch kleinere Werkstücke durch die entstehenden Spalte fallen können.

Aufgabe der vorliegenden Erfindung ist die Schaffung eines Plattenbandförderers der eingangs genannten Art, welcher verschleissarme Umlenkbewegungen in beiden Richtungen zur Plattenoberfläche bei gleichbleibend guter Ueberdeckung zuläst.

Diese Aufgabe wird mittels der im kennzeichnenden Teil des Patentanspruches 1 angegebenen Lehre gelöst. Weitere Merkmale und Einzelheiten sind in den weiteren Ansprüchen angegeben.

Die erfindungsgemässe Ausbildung des Plattenbandförderers gewährleistet eine labyrinthartige in jeder Betriebslage gleichbleibende Ueberdeckung der einzelnen Platten wobei die vorzugsweise sich gegenseitig nicht berührenden Platten eine verschleissarme Arbeitsweise mit auch nach langer Betriebsdauer immer gleichbleibenden Ueberdeckungsverhältnissen ermöglichen.

Insbesonders beim Strahlen von kleinen Kunststoffteilen wie z. B. O-Ringen ermöglicht dieser Plattenbandförderer eine störungsfreie Arbeitsweise mit weniger Werkstückverlusten.

Die Erfindung ist in den beiliegenden Zeichnungen anhand von Ausführungsbeispielen dargestellt und nachfolgend beschrieben. Es zeigen:

Fig. 1      eine Teildraufsicht auf einen Plattenbandförderer,

Fig. 2      einen Schnitt entlang der Linie II - II von Fig. 1

Fig. 3      die Anordnung eines Plattenbandförderers als Muldenband einer Schleuderstrahlmaschine in ver-

0009729

- 3 -

einfachter Darstellung,

Fig. 4    einen vereinfachten Teilschnitt entsprechend Fig. 1
mit einer Ausführungsvariante der Platten,

Fig. 5    eine weitere Ausführungsvariante von Fig. 4 und

Fig. 6    eine weitere Ausführungsvariante von Fig. 4.

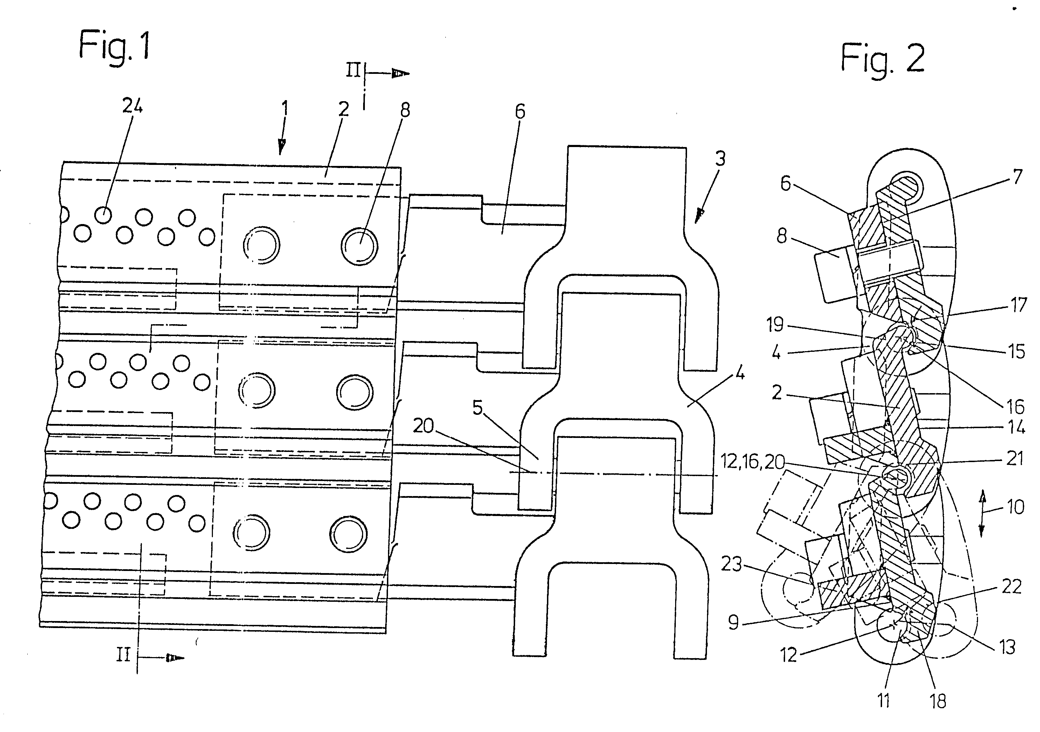

Der in den Fig. 1 und 2 gezeigte Plattenbandförderer 1 besteht aus sich gegenseitig überdeckenden Platten 2 welche beidseitig an je einer Gelenkkette 3 befestigt sind. Die Gelenkkette 3 besteht aus mittels Drehgelenken 5 verbundenen Kettengliedern 4 welche mit einem seitlichen einwärts gerichteten Lappen 6 versehen sind. Die Lappen 6 weisen eine flache obere Befestigungsfläche 7 auf, welche gegenüber der Verbindungslinie zweier benachbarter Drehgelenke 5 schräg angeordnet ist. Die Platten 2 liegen mit ihrer Unterseite 9 auf der Befestigungsfläche 7 auf und sind beidseits an je einem Kettenglied 4 mittels Schrauben 8 befestigt. Die Unterseite 9 jeder Platte 2 weist eine auf deren ganzen Länge sich erstreckende und quer zur Durchlaufrichtung 10 angeordnete Nute 11 auf, welche im Querschnitt halbkreisförmig mit einem von einer Kreis-Mitte 12 ausgehenden Radius 13 ausgebildet ist. An der Oberseite 14 der Platte 2 ist eine zur Nute 11 parallele und gleich lange Leiste 15 angeordnet, welche im Querschnitt ebenfalls halbkreisförmig mit einem von einer Kreis-Mitte 16 ausgehenden Radius 17 ausgebildet ist. Die Nute 11 und die Leiste 15 sind jeweils an den in Durchlaufrichtung 10 gesehenen gegenüberliegenden Enden 18, 19 der Platte 2 angeordnet.

Die Distanz zwischen den beiden Kreis-Mitten 12 und 16 entspricht der Distanz zwischen zweier Drehachsen 20 der Drehgelenke 5 eines Kettengliedes 4. Durch die schräg angeordnete Befestigungsfläche 7 kommt die Leiste 15 einer Platte 2 in der Nute 11 der nächstfolgenden Platte 2 so zu liegen, dass die
Kreis-Mitten 12 und 16 der Nute 11 und der Leiste 15 koaxial
zur Drehachse 20 jedes Drehgelenkes 5 angeordnet sind.

Durch den gegenüber dem Radius 13 der Nute 11 kleineren Radius
17 der Leiste 15 entsteht an der Ueberlappungsstelle ein gleichmässiger Spalt 21 welcher vorteilhafterweise 0,1 bis 1 mm
betragen sollte.

Die Platte 2 weist auf deren Oberseite 14 an ihrem Ende 18 einen
Verstärkungswulst 22 auf, welcher vorzugsweise wie dargestellt
trapezförmig oder auch halbkreisförmig ausgebildet ist. Dieser
Verstärkungswulst 22 verbessert auch die Umwälzwirkung eines
derartigen Plattenbandförderers. Zur Erhöhung der Biegesteifigkeit ist an der Unterseite 9 eine Rippe 23 angeschweisst. Die
Platten 2 sind ausserdem mit Löchern 24 versehen, um dem Strahlmittel Durchgang zu verschaffen.

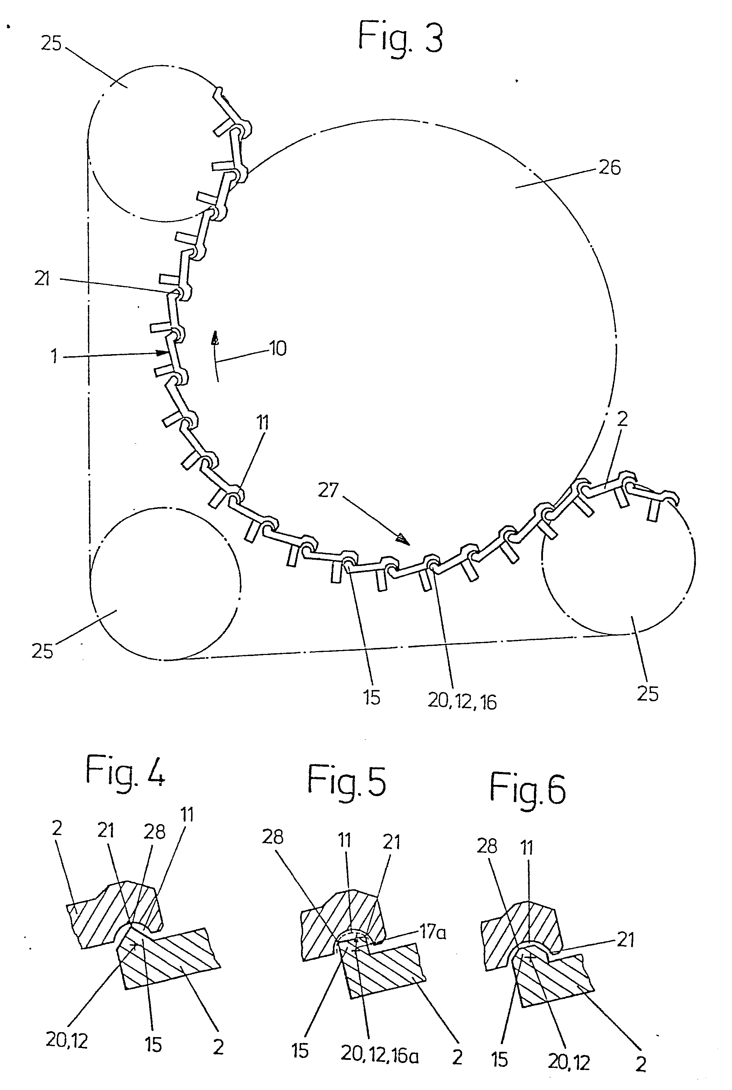

Fig. 3 zeigt die Verwendung des hier beschriebenen Plattenbandförderers 1 in einer Stahlmaschine zur Umwälzung der zu
strahlenden Werkstücke. Der Plattenbandförderer wird dabei um
beidseitig je drei angeordnete Umlenkrollen 25 und je eine
Scheibe 26 derartig umgelenkt dass eine Bandmulde 27 entsteht.
Hierbei erfolgt ein Abbiegen des Plattenbandförderers 1 in
beide Richtungen der Plattenoberfläche. Die einzelnen Platten
2 schwenken dabei sich gegenseitig nicht berührend um die Drehachse 20 wobei der Spalt 21 zwischen der Leiste 15 einer Platte 2 und der Nute 11 der nachfolgenden Platte in jeder Betriebslage immer gleich gross ist.

Die Fig. 4 bis 6 zeigen die Uebergangsstellen zweier aufeinanderfolgender Platten 2 in einem vereinfachten Teilquerschnitt wobei die Nute 11 wie bereits zu Fig. 1 beschrieben
halbkreisförmig und die Leiste 15 eckig ausgebildet ist. Fig. 4
zeigt eine dreieckige, Fig. 5 eine viereckig und Fig. 6 eine sechseckig ausgebildete Leiste 15, wobei deren Anordnung in bezug auf die Kreismitte 12 und die Drehachse 20 so festgelegt ist, dass zwischen deren Kanten 28 und der Nute 11 in jeder Schwenklage ein gleicher Spalt 21 vorhanden ist. Dies wird dadurch erreicht, dass die Kanten 28 auf einem Radius 17a liegen, dessen Mitte 16a koaxial zur Kreis-Mitte 12 angeordnet ist (siehe Fig. 5). Die eckig ausgebildete Leiste ermöglicht deren einfache Herstellung.

Durch einen möglichst kleinen Spalt 21 können mit diesem Plattenbandförderer 1 auch kleine Teile insbesondere aus Kunststoff umgewältzt und gestrahlt werden ohne dass die Teile zwischen den Platten eingeklemmt werden bzw. zwischen diesen durchrutschen können.

P a t e n t a n s p r ü c h e

1. Plattenbandförderer, insbesondere für die Förderung und
Umwälzung der Werkstücke bei Strahlmaschinen, bestehend
aus sich gegenseitig überdeckenden Platten und seitlich
angeordneten Gelenkketten, wobei jede Platte an einem
seitlichen Lappen der Kettenglieder befestigt ist, dadurch
gekennzeichnet, dass jede Platte (2) eine quer zur Durchlaufrichtung (10) angeordnete im Querschnitt halbkreisförmig ausgebildete Nute (11) und auf der anderen Plattenseite eine dazu parallele Leiste (15) aufweist und dass die
Leiste (15) einer Platte (2) in der Nute (11) der nächstfolgenden Platte (2) zu liegen kommt, wobei die Kreis-Mitte
(12) der Nute (11) koaxial zur Drehachse (20) des die Kettenglieder (4) verbindenden Drehgelenkes (5) angeordnet ist.

2. Plattenbandförderer nach Anspruch 1, dadurch gekennzeichnet, dass die Leiste (15) im Querschnitt halbkreisförmig
ausgebildet ist und dass deren Kreis-Mitte (16) koaxial zur
Kreis-Mitte (12) der Nute(11) angeordnet ist.

3. Plattenbandförderer nach Anspruch 1, dadurch gekennzeichnet,
dass die Leiste (15) im Querschnitt eckig, vorzugsweise
dreieckig, viereckig oder sechseckig ausgebildet ist
(Fig. 4 bis 6).

4. Plattenbandförderer nach Anspruch 1 oder einem der Ansprüche 2 und 3, dadurch gekennzeichnet, dass zwischen der
Leiste (15) einer Platte (2) und der Nute (11) der
nachfolgenden Platte (2) ein Spalt (21) vorhanden ist.

5. Plattenbandförderer nach Anspruch 4, dadurch gekennzeichnet, dass der Spalt (21) 0,1 bis 1,0 mm beträgt.

0009729

− 2 −

6. Plattenbandförderer nach einem der Ansprüche 1 bis 5, dadurch gekennzeichnet, dass die Platte (2) auf der der Nute (11) gegenüberliegenden Plattenseite einen Verstärkungswulst (22) aufweist.

Fig. 1

Fig. 2

1/2

0009729

## Fig. 3

## Fig. 4

## Fig. 5

## Fig. 6

Europäisches Patentamt

**EUROPÄISCHER RECHERCHENBERICHT**

0009729

Nummer der Anmeldung

EP 79 103 566.0

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| | FR – A – 1 090 987 (USINES CHIMIQUES ET METALLURGIQUES) * Seite 1, rechte Spalte; Fig. 1 * | 1,4,5 |
| | DE – U – 1 869 364 (KNAUST et al.) * Anspruch 3; Fig. 3 * | 1,4,5 |
| D | CH – A – 398 896 (BELL INTERCONTINENTAL CORPORATION) * ganzes Dokument * | 1 |
| D | CH – A – 399 228 (BELL INTERCONTINENTAL CORPORATION) * ganzes Dokument * | 1 |
| A | DE – U – 1 875 083 (ARTOS MASCHINENBAU) | |
| A | DE – B – 2 021 143 (UDEN & CO.) | |

**KLASSIFIKATION DER ANMELDUNG (Int.Cl.3)**

B 65 G 17/06
B 24 C 3/26

**RECHERCHIERTE SACHGEBIETE (Int.Cl.3)**

B 22 D 29/00
B 24 C 3/00
B 65 G 17/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X   Der vorliegende Recherchenbericht wurde für alle Patentansprüche erstellt.

| Recherchenort | Abschlußdatum der Recherche | Prüfer |
|---|---|---|
| Berlin | 27-12-1979 | SIMON |

EPA form 1503.1  06.78